# EUROPEAN PATENT APPLICATION

(11) **EP 0 723 891 A1**
(43) Date of publication of application: **31.07.1996**
(21) Application number: 95300422.3
(22) Date of filing: 24.01.1995
(51) Int. Cl.: B60R 13/04

(54) **Flange finisher with core**

(71) Applicant: THE STANDARD PRODUCTS COMPANY, Cleveland Ohio 44102 (US)
(72) Inventor: Mesnel, Gerard, F-78420 Carrieres Sur Seine (FR)
(74) Representative: Yeadon, Mary Elizabeth

(57) **Abstract**

A flange finisher (10) has a structural core (12) covered with an elastomeric cover (14). The core (12) of the flange finisher (10) has a plurality of transversely extending, generally channel-shaped parallel elements with legs (16,18) connected by pairs of generally triangularly shaped connectors. The connectors are alternatingly positioned along an axis parallel to the longitudinal axis of the finisher to provide desirable compression and bending properties to the finisher.

## Description

### Background of the Invention

The present invention relates to an extruded strip which' clampingly attaches to a flange edge for decorative or protective purposes. More particularly, the present invention relates to a flange finisher with an improved structural core member which is well adapted to support a seal around the flange edge of a door opening of an automotive vehicle.

Flange finishers are used to cover flange edges and to support seals such as tubular seals around the edges of door openings of automotive vehicles. Flange finishers are generally U-shaped in cross-section and are clampingly secured to flange edges of automotive vehicles as well as to flange edges of appliances. While the use of flange finishers is known, there remains a problem with their use on flange edges which extend around a curve or radius which requires the flange finisher to bend around the radius. Since a flange finisher is often applied to a flange edge which extends around a radius, this is an frequent problem. In use around a radius, a flange finisher may have difficulty in remaining correctly oriented. That is, the flange finisher may twist in an undesirable manner when applied around a radius.

A flange finisher commonly has a structural core with an elastomeric cover. The structural core provides the clamping force required to secure the finisher onto the flange edge and provides the structural member for the elastomer and support for a seal. A strong structural core is desirable to securely clamp the finisher onto the flange edge. The strength of the core, however, may interfere with the ability of the flange finisher to accommodate bending in more than one plane without rotating about its longitudinal axis. Such bending, or twisting, is unattractive and interferes with the ability of the flange finisher to provide a good seal where the finisher is carrying a lip or tubular seal. This is particularly the case where the flange finisher is required to extend around a small radius curve.

Another problem is encountered by flange finishers with structural cores where the flange finisher supports a tubular seal. Where the finisher extends around a small radius flange edge with the seal located on the inside of the radius, such as is commonly the case for a flange finisher used around the door opening of an automotive vehicle, the tubular seal may collapse because the wall of the seal proximate to the U-shaped clamping portion of the finisher is stretched relative to the distal wall of the seal. Such stretching and consequent collapsing of the seal can be avoided by compression of the U-shaped portion of the flange finisher about the radius. However, the structural core must allow such compression to occur.

Therefore, it is an object of the present invention to provide a flange finisher with a strong structural core which flange finisher is well adapted to both securely attach to a flange edge and to extend around a flange radius without twisting about its longitudinal axis in an unsightly and undesirable manner. It is another object of the present invention to provide a flange finisher which can carry a tubular seal and is well adapted to extend around a radius without collapse of the seal. It is a further object of the present invention to provide a flange finisher which is economically practical to manufacture and use in the manufacture of an automotive vehicle. These and other objects will become apparent from the following disclosure and accompanying drawings.

### Summary of the Invention

In accordance with the present invention, a flange finisher has a structural core covered with an elastomeric cover. The core of the flange finisher has a plurality of transversely extending, generally channel-shaped parallel elements with legs connected by pairs of generally triangularly shaped connectors. The connectors are alternatingly positioned along an axis parallel to the longitudinal axis of the finisher to provide desirable compression and bending properties to the finisher.

### Brief description of the Drawing

Figure 1 is a perspective view of a preferred embodiment of a flange finisher of the present invention, shown partially in section and broken away;
Figure 2 is a perspective view of the structural core of the flange finisher of Figure 1, shown broken away; and
Figure 3 is a plan view of a blank of the structural core of the flange finisher of Figures 1 and 2 shown broken away and illustrating the core before it is bent into a channel shape.

### Description of the Preferred Embodiments

Now referring to the figures, a preferred embodiment of a flange finisher of the present invention is shown and indicated generally by the numeral 10. Flange finisher 10 has an elongated structural core 12 which is covered by an elastomeric cover 14 which is extruded thereover in a conventional manner.

Structural core 12 comprises a plurality of parallel alternating elements 16 and 18 which are flat strips of steel or other structural material and which are each generally channel-shaped as viewed in cross-section. Each element 16 has a web 20 which joins proximal ends of a pair of legs, 22 and 24 and each element 18 has a web 26 which joins proximal ends of a pair of legs 28 and 30.

The distal ends of legs 22 and 24 respectively carry bases 32 and 34 of generally triangular-shaped connector links 36 and 38 with the tops 40 and 42 of links 32 and 34 joined to the distal ends of adjacent legs 28 and 30. The medial part of legs 28 and 30 carry bases 44 and 46 of generally triangular-shaped connector links 48 and 50 with the tops 52 and 54 of links 48 and 50 joined to medial parts of adjacent legs 22 and 24.

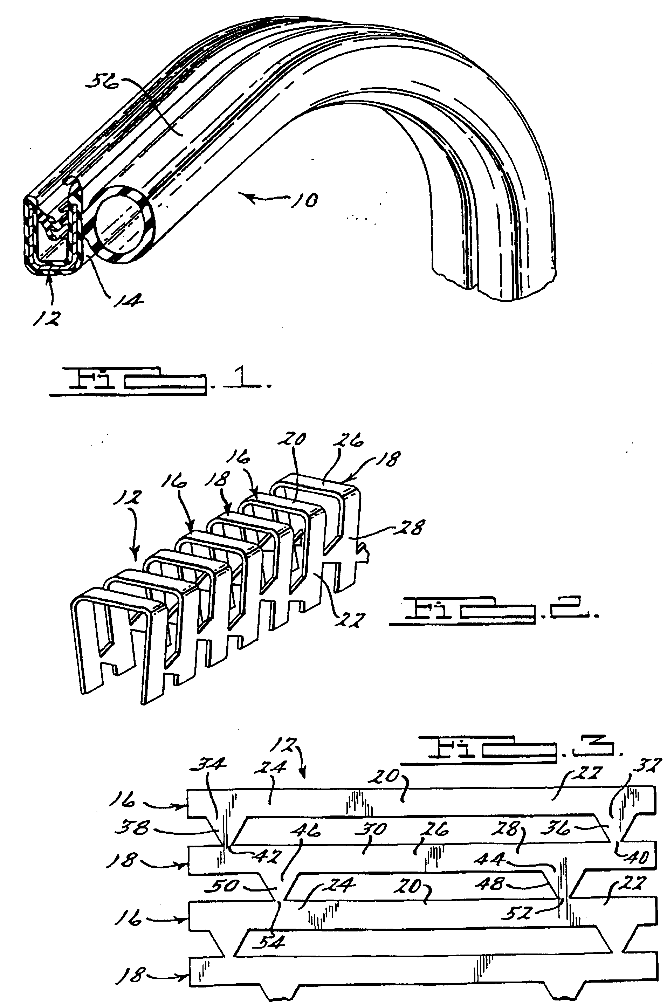

As is best shown in Figure 3, it is contemplated that structural core 12 of the present invention will be fabricated by first stamping the plan view shape of Figure 3 out of a flat piece of material such as steel, aluminum, polymeric material or the like. Then the channel or "U" shaped structure of Figure 2 is formed by roll forming as is conventional in the art. Finally, elastomeric cover 14 is extruded about core 12 as is also conventional in the art.

Elastomeric cover 14 is made of synthetic elastomeric material such as EPDM or other synthetic rubber as is conventional in the art and carries tubular seal 56 as is shown in figure 1. It will, of course, be appreciated that other sealing or decorative means can be carried by elastomeric cover 14 within the broad scope of the present invention such as other seals, ribs, lips or the like. The use of such seals or cosmetic parts is well known to those skilled in the art and are contemplated for use with the flange finisher of the present invention.

In use, flange finisher 10 of the present invention is well adapted to extend around the radius of an edge of a flange without unwanted or harmful turning or twisting of the flange finisher about the longitudinal axis thereof and without collapse of tubular seal 56. Thus, and as is illustrated in Figure 1, flange finisher 10 can extend around a small radius curve as is required to extend around the radius of a flange edge with minimal twisting about the longitudinal axis of the flange finisher 10 because of the advantageous construction of the structural core 12. Furthermore, structural core 12 can be compressed along its longitudinal axis to thereby allow tubular seal 56 to extend around the radius without collapsing a wall thereof. These desirable functional results are obtained by the particular structure of core 12 and, especially, of the position and shape of connector links 36, 38, 48 and 50 connecting elements 16 and 18.

It will of course, be appreciated that the exact positions of connector links 36, 38, 48 and 50 on legs 22, 24, 28 and 30 can be adjusted to best achieve the desired functional result. The parallel elements 16 and 18 of structural core 12 are secured one to the other by connector links 36, 38, 48 and 50 in a unique fashion which facilitates the bending of structural core 12 in planes parallel to the longitudinal axis of core 12 without twisting while also allowing compression of core 12 along its longitudinal axis. Hence, flange finisher 10 is well adapted to be installed around a radius without collapse of tubular seal 56 or twisting of flange finisher 10 about its longitudinal axis. Thus, alternating pairs of transversely extending generally U-or channel-shaped parallel elements are secured to each other by generally triangular-shaped connector links which are alternatingly positioned at the distal ends and medially of the legs of the elements 16 and 18. This arrangement facilitates the flexibility of structural core 12, allows the spacing between elements 16 and 18 of core 12 to be compressed along the longitudinal axis of flange finisher 10 during installation of flange finisher 10 around a radius and yet the structural strength of core 12 is maintained.

It will be appreciated that, while a preferred embodiment of the present invention is disclosed herein, it is contemplated that the present invention will be subject to some variation and modification within the broad scope of the invention as is within the skill of those in the art. Therefor, it is intended that the scope of the present invention is to be limited only by the scope of the claims appended hereto.

## Claims

1. An flange finisher for use on an a flange edge of the sheet metal of an automotive vehicle or the like, the flange finisher having a structural core covered by an elastomeric cover, wherein the structural core comprises a plurality of transversely extending parallel elements each having a channel shape with a web joining a pair of legs, the legs of adjacent elements being joined by generally triangular-shaped connector links, said connector links being positioned at the distal ends of said legs and medially of said legs in an alternating fashion.

2. The flange finisher of claim 1, wherein said core is comprised of steel and said cover is comprised of a synthetic rubber.

3. The flange finisher of claim 2, wherein said cover has a tubular seal secured thereto.

4. The flange finisher of claim 3, wherein said flange finisher has a length with a portion of said length having spacing between said adjacent elements reduced such that said flange finisher core is thereby compressed along the longitudinal axis thereof.

5. In combination with a flange edge extending around a door opening of an automobile, said door opening having radius edges, a flange finisher clampingly mounted on the door flange edge including the radius edges thereof, the flange finisher having a structural core covered by an elastomeric cover carrying a tubular seal, the core comprising a plurality of transversely extending elements each having a generally channel-shape with a web joining a pair of legs with legs of adjacent elements being joined by a pair of generally triangular-shaped connector links, said connector links being positioned at the distal ends and medially of said legs in an alternating fashion.

6. The combination of claim 5, wherein said core is comprised of steel and said cover is comprised of synthetic rubber.
